# EUROPEAN PATENT SPECIFICATION

(11) **EP 2 105 204 B1**
(45) Date of publication and mention of the grant of the patent: **08.02.2012**
(21) Application number: 07831208.9
(22) Date of filing: 05.11.2007
(51) Int. Cl.: B01D 21/00, B03B 5/32, B03B 5/34, C02F 1/00, C02F 1/38

(54) **SAND SEDIMENTATION SEPARATION APPARATUS**
SANDSEDIMENTATIONSTRENNVORRICHTUNG
APPAREIL DE SÉPARATION DE SABLE PAR SÉDIMENTATION

(30) Priority: 01.12.2006 JP 2006325364
(43) Date of publication of application: 30.09.2009
(73) Proprietor: Maezawa Industries, Inc., Tokyo 104-0033 (JP)
(72) Inventor: KODAKA, Shirou, Tokyo 104-0033 (JP); ARIMATSU, Naruto, Tokyo 104-0033 (JP); HANDA, Yoshikazu, Tokyo 104-0033 (JP)
(74) Representative: Müller-Boré & Partner Patentanwälte
(86) International application number: PCT/JP2007/071475
(87) International publication number: WO 2008/065858

(56) References cited:
- DE-U1- 9 116 560
- JP-A- 04 501 891
- JP-A- 2001 073 402
- JP-A- 2001 073 402
- JP-A- 2004 160 415
- JP-A- 2005 279 516
- JP-A- 2005 305 304

## Description

### Technical Field

The present invention relates to grit separation equipment for separating and depositing sand grains in raw water flowing through a water treatment facility.

### Background Art

In rivers, lakes and marshes, dam lakes, and a water treatment facility such as a sewage treatment plant or a purification plant, there are provided a grit chamber for depositing and separating sand mixed in raw water, a sand lifting device for pumping up the deposited sand separated in the grit chamber together with the raw water, a separation device for further separating sand from the raw water pumped up by this sand lifting device, a screw conveyor for conveying the separated sand, and a storage hopper for storing the sand conveyed by the screw conveyor, as described in patent document 1.
Patent document 1: Japanese Patent Laid Open Publication No. 3-146147

### Disclosure of Invention

### Technical Problem

However, coarse sand grains, gravel, and fine sand grains are mixed in sand grains separated by the separation device of the water treatment facility as described above, and there is a necessity for classifying such coarse grains, gravel, and fine grains from the separated sand grains in another step, to efficiently use such grains.
JP 2001 073 402 A discloses a device for processing dredging slurry having several sand separating parts arranged in plural series along a carrying route in the dredging slurry processing device. The sand separating parts are provided with flow passages for flowing the slurry from inflow ports to outflow ports and sand discharge ports for discharging the sand settled at the bottom of the sand separating parts along the carrying route. Flow speed of the dredging slurry flowing inside of the upstream side sand separating parts is set higher than the flow speed of the dredging slurry flowing inside of the downstream side sand separating parts.
JP 2005 279516 A describes a flocculation and precipitation treatment device. According to said document, a sedimentation promoting material separation chamber is located downstream of a floc separation means and has a spiral flow path. The sand separated in the separation means is guided to an underlying sedimentation-promoting material reservoir part.
DE 91 16 560 U1 discloses an apparatus for cleaning contaminated soils, wherein the soil is introduced into a cylindric reservoir. Due to high pressure injection nozzles which impart a cleaning fluid into the reservoir and generate a cyclic flow, the soil performs a rotational movement. On the bottom of the reservoir different containers are arranged in radial direction, the different containers taking up grains of different sizes sinking down in the cleaning fluid.
In JP 2004 160 415 A, there is disclosed a solid-liquid separator, the bottom part of which is connected to a screw conveyor for conveying the separated solid out of the separator.
JP 2005 305 304 A describes an apparatus for washing and solid-liquid separation of granular material. According to said document, there is provided a separation part with a spiral flow passage in which the granular material is separated and led to a discharge part.

### Problem to be solved by the Invention

In view of the above-described circumstances, a problem of the present invention is to provide grit separation equipment capable of effectively classifying and separating coarse sand grains and fine sand grains from the beginning and separating them from raw water, with compact and efficient construction.

The problem is solved by a grit separation equipment having the features disclosed in claim 1. The equipment comprises two grit separation tanks disposed on an upstream side and on a downstream side respectively in a flow direction of raw water, with each grit separation tank having, in an upper part thereof, a separation device to separate sand grains from the raw water by action of centrifugal force and gravity, by flowing the raw water through a spiral channel, and having, in a lower part thereof, an accumulation device to settle/deposit the sand grains separated by the separation device, wherein the separation device of the grit separation tank on the upstream side is configured to separate coarse sand grains by flowing the raw water through the spiral channel at high speed, and the separation device of the grit separation tank on the downstream side is configured to separate fine sand grains by flowing the raw water through the spiral channel at lower speed than in the separation device of the grit separation tank on the upstream side, and a raw water supply pipe is connected to a raw water inflow section of the grit separation tank on the upstream side, and a raw water outflow section of the grit separation tank on the upstream side and a raw water inflow section of the grit separation tank on the downstream side are connected to each other by a connecting pipe, and a raw water discharge pipe is connected to the raw water outflow section of the grit separation tank on the downstream side.

According to the invention, the accumulation device in at least either one of the grit separation tank on the upstream side and the grit separation tank on the downstream side may have an outside classifying chamber and an inside classifying chamber provided to be isolated from the outside classifying chamber, and the separation device may have the spiral channel formed so as to extend from an upper part of the outside classifying chamber to an upper part of the inside classifying chamber, for passing the raw water therethrough, and may have a slit formed along the spiral channel to allow the sand grains in the raw water to drop, which can then be classified and separated into the outside classifying chamber and the inside classifying chamber according to a size of the sand grains, and the raw water outflow section can be formed on a terminal end of the spiral channel.

According to an embodiment of the invention, a coagulant can be added to the grit separation tank on the downstream side, in the grit separation.

According to an embodiment of the invention, the spiral channel may be provided in the separation device of the grit separation tank on the downstream side, so as to reduce flow speed step by step, and the accumulation device has a plurality of classifying chambers so that the sand grains separated in each flow speed can be classified and accumulated.

According to an embodiment of the invention, the raw water inflow section on the upstream side grit separation tank can be provided in a center of a spiral of the spiral channel, in the grit separation equipment according to any one of claims 1 to 3.

According to an embodiment of the invention, the accumulation device in at least either one of the grit separation tank on the upstream side and the grit separation tank on the downstream side may have an outside classifying chamber and an inside classifying chamber provided to be isolated from the outside classifying chamber, and the separation device may have a first spiral channel formed so as to extend from an upper part of the outside classifying chamber to an upper part of the inside classifying chamber, for passing the raw water therethrough, a second spiral channel branched from the first spiral channel and provided under the first spiral channel, for passing the raw water therethrough, an opening formed at a position where the second spiral channel can be branched from the first spiral channel, and a slit formed along each of the first spiral channel and the second spiral channel to allow the sand grains in the raw water to drop, which can then be classified and separated into the outside classifying chamber and the inside classifying chamber according to a size of the sand grains, and the raw water outflow section can be formed on a terminal end of each of the spiral channels.

According to an embodiment of the invention, a bottom plate of the spiral channel may be downwardly inclined to the slit, in a direction in which a centrifugal force acts on the raw water flowing through the spiral channel.

According to an embodiment of the invention, single or multiple classifying chambers may be further provided inside of the inside classifying chamber.

According to an embodiment of the invention, a sand removing means may be provided on a bottom of the multiple classifying chambers.

According to an embodiment of the invention, the spiral channel is formed spirally or concentrically.

### Advantageous Effects

According to the invention, the grit separation tank on the upstream side and the grit separation tank on the downstream side play their respective assigned role so that the sand grains are efficiently separated and caught. That is to say, since the coarse sand grains can be separated and caught under a high flow speed in the grit separation tank on the upstream side, and the fine sand grains not caught on the upstream side can be separated and caught under a low flow speed in the grit separation tank on the downstream side, a coarse grain object and a fine grain object mixing together in the raw water can be efficiently separated and caught in the respective grit separation tanks. Therefore, compact and effective equipment can be configured. Moreover, since the coarse grains and fine grains of the sand grains are separately caught, the caught sand grains can be directly used in another use, and convenience is improved.

Since, according to an embodiment of the invention, a coagulant may be added to the grit separation tank on the downstream side, fine grain solid matter in the raw water can be efficiently caught, and the raw water can be further cleaned up.

Since, according to an embodiment of the invention, the sand grains may be classified and caught in the grit separation tank on the downstream side according to the magnitude of flow speed of the raw water, the sand grains can be provided toward finer classified use.

Since, according to an embodiment of the invention, the raw water may flow into the central part of the spiral channel of the grit separation tank on the upstream side, when the raw water first flows into the grit separation tank, the sand grains with large grain size (gravel and the like) can be separated by a gravitational action. That is to say, when a largish solid matter is previously removed before beginning to flow along the spiral channel, unnecessary wear on an outer peripheral wall of the spiral channel by centrifugal force can be saved as much as possible.

According to an embodiment of the invention, the sand grains in the raw water flowing in the spiral channel can be separated by the action of centrifugal force and the action of gravity, and can be classified and accumulated in the outside classifying chamber and the inside classifying chamber according to the size of the sand grains. Therefore, the sand grains accumulated in the each classifying chamber can be effectively used immediately.

Moreover, since the treated water by separating the sand grains may be discharged from the raw water outflow section at the terminal end of the spiral channel, the sand grains dropping in the inside classifying chamber and the treated water after the discharge do not mix each other. Therefore, since the sand grains are not involved in the flow of the treated water and do not mix into the treated water, clean water can be guided to a discharge path.

Since, according to an embodiment of the invention, multi-layered spiral channels can be configured with the spiral channel branching off, and the raw water flows in plural spiral channels on the downstream side than the opening provided at each branch location of the spiral channel, the flow speed thereof is reduced, and the deposit of the sand grains in the raw water is accelerated.

Since, according to an embodiment of the invention, a bottom plate of the spiral channel can be configured to downwardly incline to the slit, in the direction where centrifugal force acts on the raw water, the sand grains separated in the spiral channel can be efficiently dropped toward the slit by the action of gravity.

Since, according to an embodiment of the invention, the classifying chamber can be further provided inside the inside classifying chamber, the sand grains with smaller grain size can be classified and accumulated.

According to an embodiment of the invention, the sand grains accumulated in each classifying chamber can be well discharged by the sand removing means.

Since, according to an embodiment of the invention, the spiral channel can be formed spirally or concentrically, the structure thereof becomes simple, and the grit separation tank can be easily designed and manufactured.

### Best Mode for Carrying Out the Invention

Preferred embodiments of the present invention will be described hereunder, with reference to the drawings.

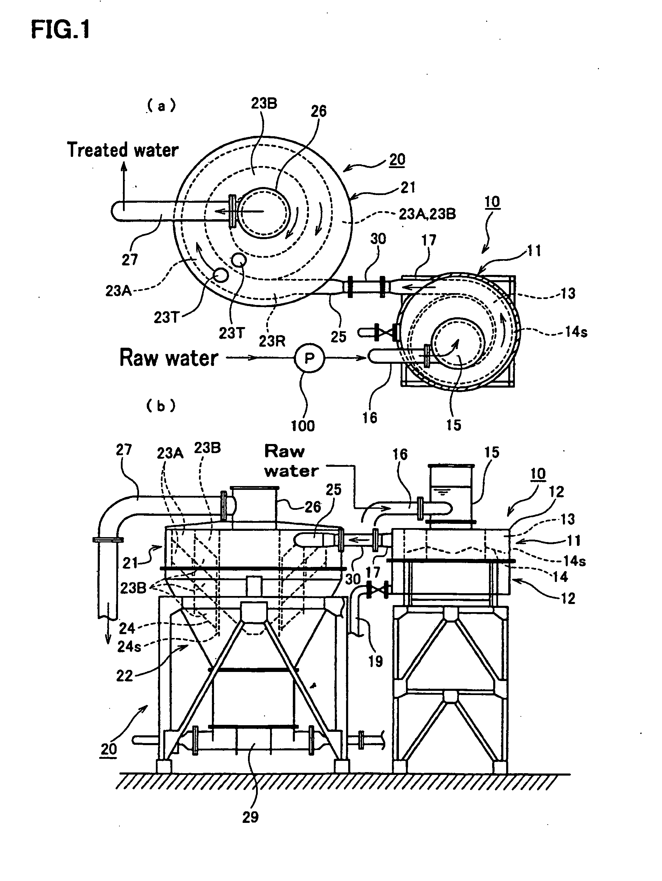

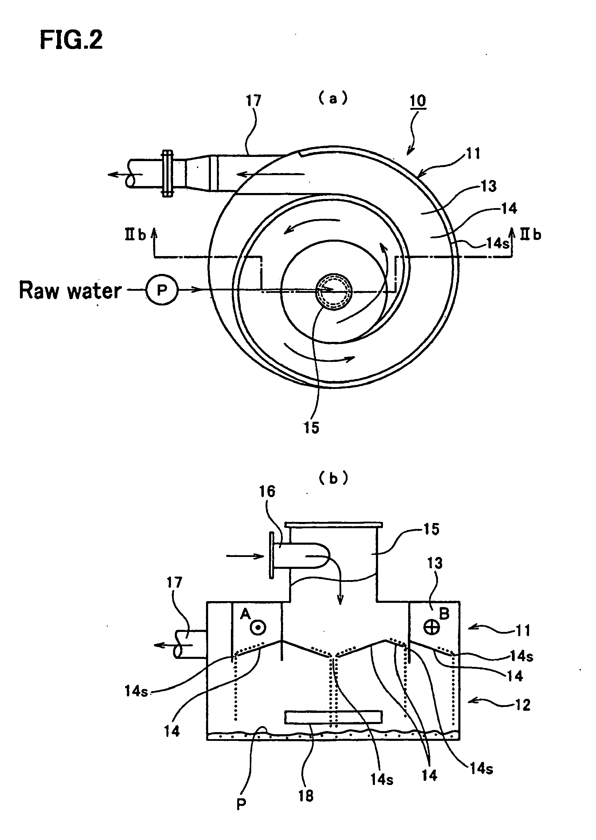

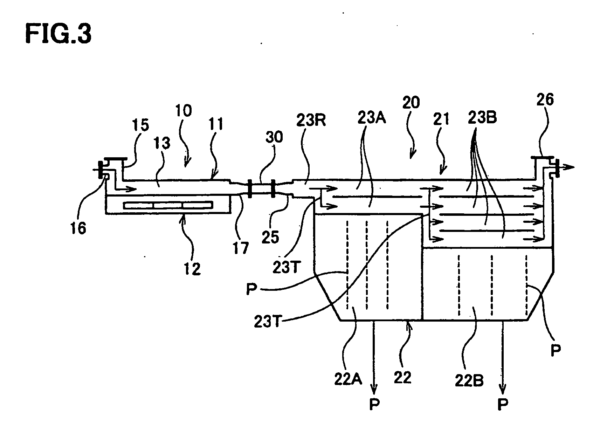

Fig. 1 (a) and (b) are a plan view and a side view of the grit separation equipment of the first embodiment of the present invention, respectively, Fig. 2 (a) and (b) are a plan view and a sectional side view showing the outline structure of the grit separation tank on the upstream side, respectively, and Fig. 3 is a schematic view showing the structure of a channel from the grit separation tank on the upstream side to the grit separation tank on the downstream side.

This grit separation equipment includes two grit separation tanks 10 and 20 disposed on the upstream side and on the downstream side in a flow direction of the raw water, and the connecting pipe 30 for connecting them. Each of the grit separation tanks 10 and 20 has the separation devices 11 and 21, in their upper part, which separate the sand grains P (see Fig. 2) in the raw water by a centrifugal action and a gravitational action by flowing the raw water along the spiral channels 13, 23A, and 23B, and the accumulation devices 12 and 22, in their lower part, which deposit and accumulate the sand grains separated in the separation devices 11 and 21.

The separation device 11 of the grit separation tank 10 on the upstream side is configured to separate the coarse sand grains by flowing the raw water through the spiral channel 13 at high flow speed, and the raw water inflow section 15 is disposed substantially at a center of the spiral channel 13. The raw water supply pipe 16 is connected to this raw water inflow section 15, so that the raw water is introduced into the raw water inflow section 15 through the raw water supply pipe 16 by pump 100. Moreover, the raw water outflow section 17 is provided at a terminal end on an outer peripheral side of the spiral channel 13.

As shown in Fig. 2, the raw water introduced to substantially the central part of the spiral channel 13 flows spirally in a direction shown by an arrow along the spiral channel 13, and flows from the raw water outflow section 17 in a tangential direction. The inclined bottom plate 14 is provided on a lower face of the spiral channel 13, in such a manner as inclining to a radial direction of the spiral and having the slit 14s on a lower end rim in the inclined direction. This slit 14s is spirally formed along a side wall of the spiral channel 13. Moreover, the inclined bottom plate 14 with the slit 14s is also provided at the central part of the spiral just under the raw water inflow section 15.

After flowing into this central part of the spiral from the raw water inflow section 15, the raw water flows spirally along the spiral channel 13 at high speed. Then, while flowing at high speed, the sand grains P with large mass (solid matter) collide with the side wall on the peripheral side of the spiral channel 13 by a centrifugal action, and drop along the peripheral wall by a gravitational action. Moreover, the sand grains P of a coarse grain are deposited by a gravitational action, and drop down along the inclined bottom plate 14 and finally from the slit 14s into the accumulation device 12 of the lower part. The sand grains P which has dropped into the accumulation device 12 are gradually deposited and accumulated on a tank bottom. The scraper device 18 is provided on a tank bottom of the accumulation device 12 as required, and the sand grains P are discharged outside through the sand discharge pipe 19 shown in Fig. 1.

In addition, the characters A and B in Fig. 2 (b) show the flow direction of the raw water in the spiral channel 13, character A shows that the raw water flows from back to front of the paper, and character B shows that the raw water flows from front to back of the paper.

Moreover, as shown in Fig. 1, the separation device 21 of the grit separation tank 20 on the downstream side is configured to separate the sand grains of the fine grain by pouring the raw water into the spiral channels 23A and 23B at the lower flow speed than the separation device 11 of the grit separation tank 10 on the upstream side, the raw water inflow section 25 is provided on the tank periphery along the tangential direction, and the raw water outflow section 26 is provided at the center of spiral of the spiral channels 23A and 23B. The raw water inflow section 25 is connected to the raw water outflow section 17 of the grit separation tank 10 on the upstream side through the connecting pipe 30. Moreover, the raw water discharge pipe 27 is connected to the raw water outflow section 26.

The spiral channels 23A and 23B are provided to reduce flow speed stepwisely in the separation device 21 of the grit separation tank 20 on the downstream side in this case. That is to say, the introduction channel 23R connected to the raw water inflow section 25 branches off into the spiral channel 23A of double spiral channels above and below through the branch section 23T at the downstream side of the introduction channel 23R. Moreover, the spiral channel 23A branches off into the spiral channel 23B of fourfold spiral channels above and below through the branch section 23T at the further downstream side of the spiral channel 23A. That is to say, as shown in the schematic view of Fig. 3, the spiral channel 23A of the first half has spiral structure of double layers above and below, and the spiral channel 23B of the second half has spiral structure of fourfold layers above and below. And, in the case that the flow speed at the introduction channel 23R is assumed to be "S", it is configured so that the flow speed at the spiral channel 23A of the first half is "S/2", and the flow speed at the second half is "S/4."

Moreover, in response to the fact that the flow speed is controlled in this two steps, the classifying chamber 22A which accumulates the sand grains P separated and caught by the spiral channel 23A of the first half, and the classifying chamber 22B which accumulates the sand grains P separated and caught by the spiral channel 23B of the second half are provided in the accumulation device 22 of the lower part, and the discharger 29 which can independently discharge accumulations in each of the classifying chambers 22A and 22B is provided in the lower part of the tank.

Next, effects are described.
According to this grit separation equipment, the sand grains can be efficiently separated and caught while the grit separation tank 10 on the upstream side and the grit separation tank 20 on the downstream side take charge of each role. That is to say, since the coarse sand grains are separated and caught under the high flow speed in the grit separation tank 10 on the upstream side, and the fine sand grains not caught on the upstream side can be separated and caught under the low flow speed in the grit separation tank 20 on the downstream side, coarse grain objects and fine grain objects which are mixed in the raw water can be efficiently separated and caught by the grit separation tanks 10 and 20, respectively. Accordingly, the whole equipment can be compactly and efficiently configured. Moreover, since the sand grains are separately caught with coarse sand grains and fine sand grains being divided, the accumulated sand grains can be provided for another use.

Moreover, since the sand grains are classified and caught according to the magnitude of flow speed of the raw water in the grit separation tank 20 on the downstream side, the sand grains can be offered to finer classified use.

Moreover, since the raw water flows into the spiral center of the spiral channel 13 in the grit separation tank 10 on the upstream side, when the raw water first flows into the grit separation tank 10, the sand grains with large grain size (gravel and the like) can be separated by gravitational action first. That is to say, since a largish solid matter can be previously removed before beginning to flow along the spiral channel 13, unnecessary wear on the outer peripheral wall of the spiral channel 13 by centrifugal force can be saved as much as possible.

Moreover, when the coagulant is added to the grit separation tank 20 on the downstream side, the fine grain solid matter in the raw water can also be efficiently caught, and cleanliness of raw water can be further improved.

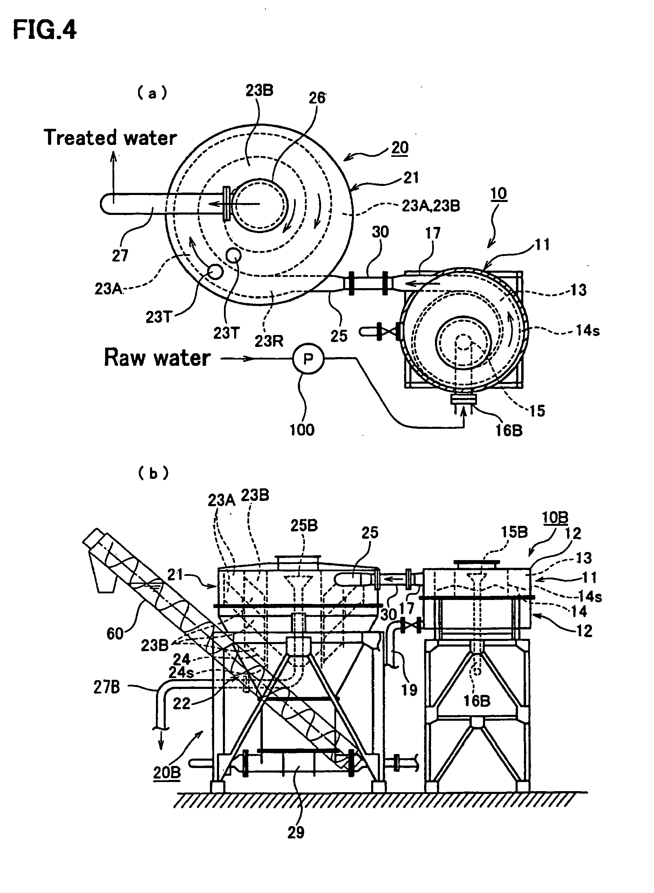

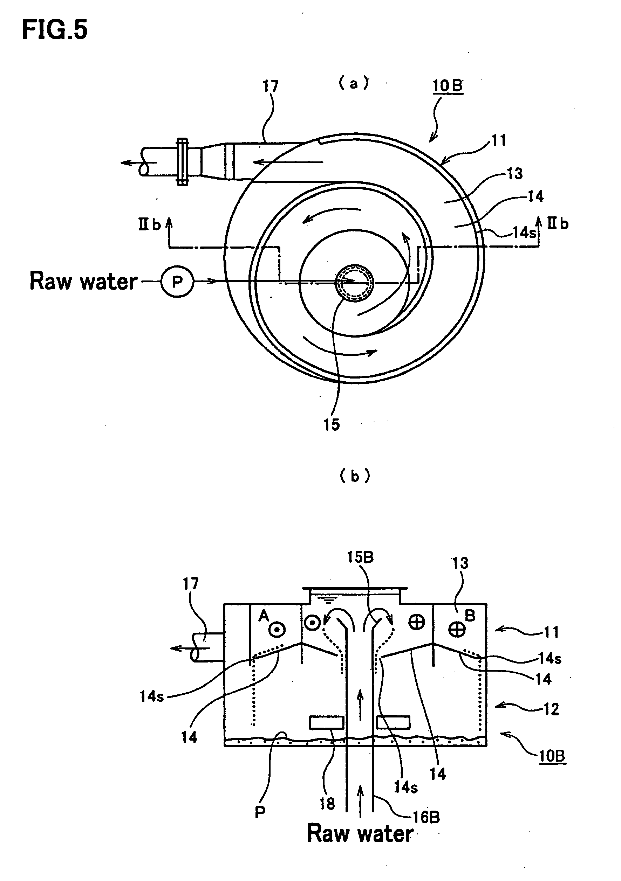

Fig. 4 (a) and (b) are a plan view and a side view of the grit separation equipment of the second embodiment of the present invention, respectively, Fig. 5 (a) and (b) are a plan view and a sectional side view showing the outline structure of the grit separation tank on the upstream side.

The first point in which the grit separation equipment of this second embodiment differs from the grit separation equipment of the first embodiment is that the raw water inflow section 15B of the grit separation tank 10B on the upstream side is provided opening upward at the level of submersion in the inside of the spiral center of the spiral channel 13, and the raw water supply pipe 16B is connected to the raw water inflow section 15B from the underside through the inside of the grit separation tank 10B. Moreover, the second point is that the raw water outflow section 26B of the grit separation tank 20B on the downstream side is provided opening upward at the level of submersion in the inside of the spiral center of the spiral channel 23B, and the raw water discharge pipe 27B is extended from the raw water outflow section 26B being extended downward through the inside of the grit separation tank 20B. Since other points are the same as the first embodiment, they are not particularly explained.

Thus, since the raw water inflow section 15B of the grit separation tank 10B on the upstream side and the raw water outflow section 26B of the grit separation tank 20B on the downstream side are provided at the lower position, the height of equipment of each of the grit separation tanks 10B and 20B can be lowered. Moreover, when the sand conveyor 60 of, for example, a screw conveyor type is provided to the grit separation tank 20B on the downstream side, since a dewatering position can be set low, the height of the whole equipment can also be lowered.

Next, each embodiment of the grit separation tank useful in being used as the grit separation tank 20 on the downstream side described above is explained in detail.

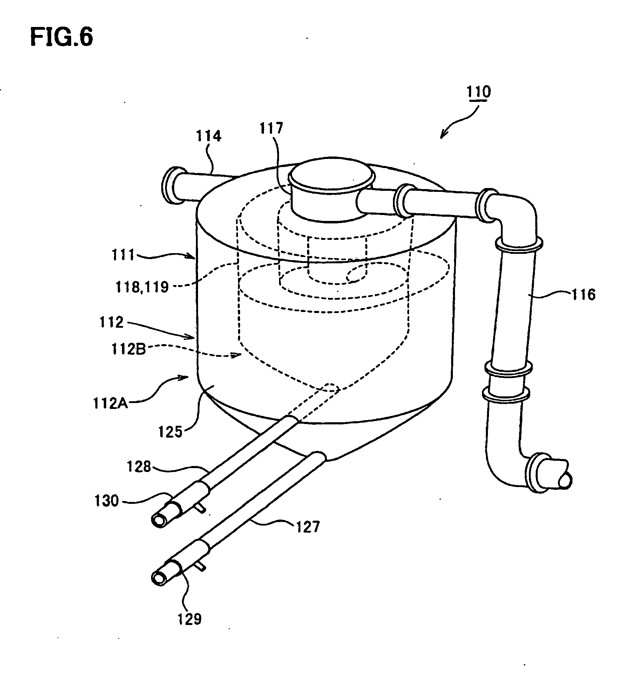

### [A] The first embodiment of the grit separation tank (Figs. 6 - 9)

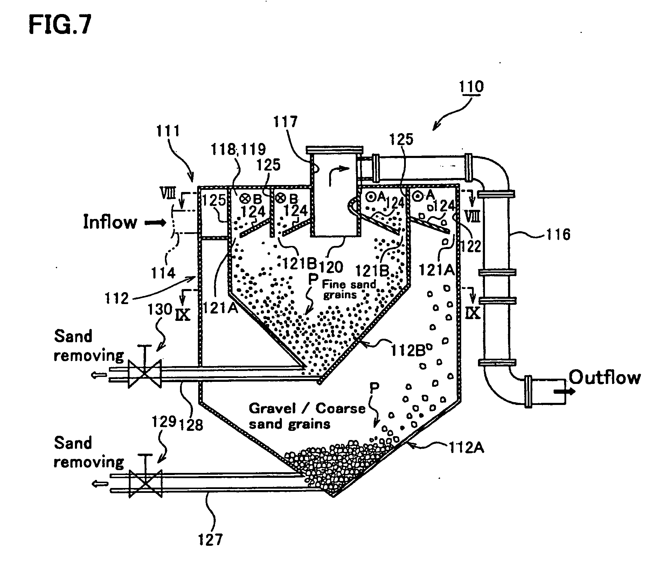

Fig. 6 is an appearance perspective view of the grit separation tank 110 showed as the first embodiment, and Fig. 7 is a longitudinal sectional view of the grit separation tank 110. As shown in these Figs. 6 and 7, the grit separation tank 110 has the separation device 111 in the upper part, and has the accumulation device 112 in the lower part. The separation device 111 and the accumulation device 112 are provided in the upper part and the lower part of an outside tank and an inside tank of dual structure, and the accumulation device 112 includes the first classifying chamber 112A as the outside classifying chamber configured by the outside tank, and the second classifying chamber 112B as the inside classifying chamber configured by the inside tank.

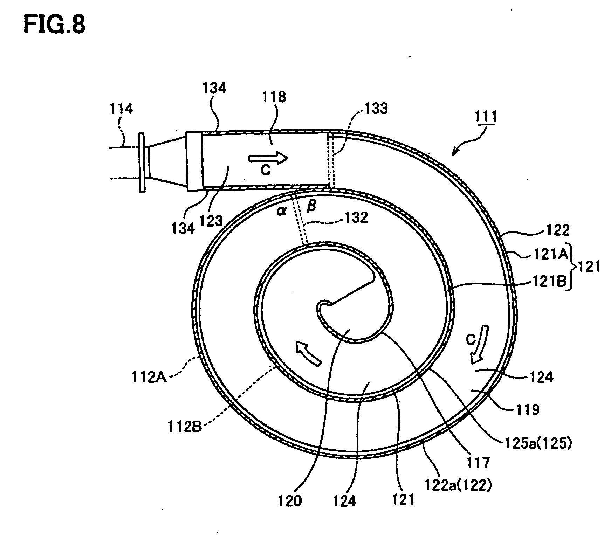

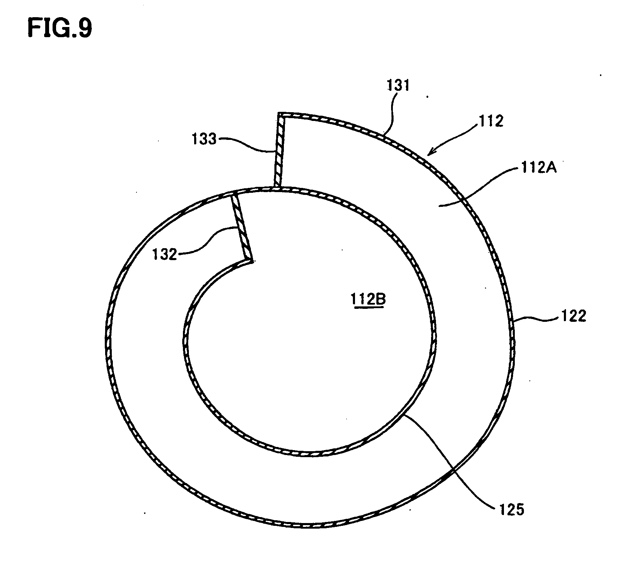

As shown in Fig. 9, the first classifying chamber 112A and the second classifying chamber 112B are configured so that the partition plate 132 is located between the intermediate areas of the plate-like body 131 which the spiral is continuously formed spirally toward the central part and the end thereof, the outside range thereof is the first classifying chamber 112A, and the inside range thereof is the second classifying chamber 112B. The first classifying chamber 112A and the second classifying chamber 112B are isolated by the partition plate 132 described above. In addition, the symbol 133 in Fig. 8 and Fig. 9 is a closure plate to blockade a beginning part of the first classifying chamber 112A, which is located between the slowdown channel 118 and the beginning part of the first classifying chamber 112A. Thus, the first classifying chamber 112A and the second classifying chamber 112B are a container made of a material resisting rust, such as stainless steel, which is formed into the approximately cylinder shape on the whole, and into the conical shape only on the bottom side, as shown in Fig. 7.

As shown in Figs. 7 and 8, the above described separation device 111 classifies and separates the sand grains P according to the magnitude thereof from the raw water. That is to say, this separation device 111 is configured to include the slowdown channel 118 which is formed into larger diameter than the raw water carrier pipe 114, and slows flow speed of the flowing raw water, the spiral channel 119 which is connected to this slowdown channel 118, and is formed into the spiral shape from the first classifying chamber 112A toward the inside of the second classifying chamber 112B, the slit 121 which is formed along this spiral channel 119, the discharge spout (raw water outflow section) 120 which is formed at the end of the spiral channel 119, the drain channel 117 which is connected to this discharge spout 120, and guides treated water by separating the sand grains P toward the discharge pipe 116 with overflow of the raw water.

The above described slowdown channel 118 is formed by the side wall 134 and the bottom plate 123 facing each other so that the shape of cross section thereof is concave, as shown in Fig. 8. Moreover, the above described spiral channel 119 connected to this slowdown channel 118 is formed by the inner surface of the upper extension wall 122a of the side wall 122 of the first classifying chamber 112A, the outer surface of the upper extension wall 125a of the side wall 125 of the second classifying chamber 112B, and the bottom plate 124, so that the shape of cross section thereof is concave. And the spiral channel 119 is provided so as to pass over the partition plate 132 described above. The above described bottom plate 124 is provided inclining downward toward a direction where centrifugal force acts on the raw water which flows the spiral channel 119 (see Fig. 7). The slit 121 is continuously formed between the point of this bottom plate 124 toward the direction of action of centrifugal force, and the inner surface of the upper extension wall 122a of the side wall 122 of the first classifying chamber 112A or the inner surface of the upper extension wall 125a of the side wall 125 of the second classifying chamber 112B. Accordingly, the bottom plate 124 is provided inclining downward toward the slit 121.

The slit. 121 is configured by the first slit 121A which separates the gravel and the coarse sand grains among the sand grains P, and the second slit 121B which separates the fine sand grains among the sand grains P. That is to say, the first slit 121A is formed in the area from the boundary position with the slowdown channel 118 in the spiral channel 119 (the position corresponding to the closure plate 133) until the position just before the second classifying chamber 112B (the front position alpha of the partition plate 132 in Fig. 8), corresponding to the first classifying chamber 112A. Moreover, the second slit 121B is formed in the area from the position facing the second classifying chamber 112B (the position beta just after the partition plate 132 in Fig. 8) until the above described discharge spout 120, corresponding to the second classifying chamber 112B.

The raw water supplied from the raw water carrier pipe 114 is slowed down by the slowdown channel 118, and flows gently after flowing into the spiral channel 119, and the sand grains P are separated by the first and second slits 121A and 121B described above. Then, the treated water by separating the sand grains P from the raw water overflows through the inside of the drain channel 117 (Fig. 7) connected to the discharge spout 120 at the end of the spiral channel 119, and is guided to the discharge pipe 116. In addition, the slowdown channel 118 and the spiral channel 119 are covered by the top plate of the arbitrary shape which is not illustrated, so that overflow water does not overflow into another area at the time of overflow.

Here, the characters A and B in Fig. 7 show the flow direction of the raw water in the spiral channel 119, the character A shows that the raw water flows from back to front of the paper, and the character B shows that the raw water flows from front to back of the paper. Moreover, in Fig. 8, the flow direction of the raw water in the spiral channel 119 is shown by the arrow C.

Since the falling speed of grains in water is proportional to the difference between the density of grains and the density of water, and the square of the radius of grains, as shown by the Stokes equation, the larger the grain size, or the heavier, the sooner the deposit. Classification means that variously sized grains are classified according to the difference of the falling speed in water. Accordingly, in the section where the raw water flowing the spiral channel 119 is located in the area corresponding to the first classifying chamber 112A, the gravel and coarse sand grains with a large grain size among the sand grains P in the raw water are immediately deposited on the bottom plate 124 of the spiral channel 119, concentrate in the inside of the first slit 121A along the side wall 122 (the upper extension wall 122a) of the outside in the direction of action of centrifugal force due to the action of centrifugal force and gravity by the inclined plane, and drop from the first slit 121A into the first classifying chamber 112A. In this area, the fine sand grains with the small grain size drifting in the raw water are not deposited on the bottom plate 124, flows in the inside of the spiral channel 119, and reaches the area corresponding to the second classifying chamber 112B.

While the raw water reaches the area corresponding to the second classifying chamber 112B in the spiral channel 119, and flows gently, the fine sand grains drifting in the raw water are deposited on the bottom plate 124, and drops from the second slit 121B along the side wall 125 (the upper extension wall 125a) of the outside in the direction of action of centrifugal force into the second classifying chamber 112B, due to the action of centrifugal force and gravity by the inclined plane of the bottom plate 124. In addition, although the angle of gradient of the inclined bottom plate 124 in the spiral channel 119 is arbitrarily selected according to the magnitude of the sand grains P, the range of 30 to 45 degrees from a horizontal plane is preferred.

Thus, the gravel and coarse sand grains among the sand grains P mixed in the raw water are separated in the section located in the area where the spiral channel 119 corresponds to the first classifying chamber 112A, drop from the first slit 121A into the first classifying chamber 112A, and are deposited and accumulated. Furthermore, the fine sand grains among the sand grains P are separated in the section located in the area where the spiral channel 119 corresponds to the second classifying chamber 112B, drop from the second slit 121B into the second classifying chamber 112B, and are deposited and accumulated. Accordingly, the sand grains P are classified and accumulated in each of the first classifying chamber 112A and the second classifying chamber 112B, according to the magnitude of them.

The treated water by separating the sand grains P overflows through the inside of the drain channel 117 (see Fig. 7) connected to the discharge spout 120 formed at the end of the spiral channel 119, and is discharged to the discharge pipe 116. At this time, since the sand grains P (fine sand grains) dropping or having dropped in the second classifying chamber 112B and the flow of the treated water overflowing through the inside of the drain channel 117 do not mix each other, the sand grains P (fine sand grains) neither are involved in the flow of treated water, nor mix with the treated water.

The sand discharge pipes 127 and 128 having the sand discharge valves 129 and 130 as a sand removing means, are connected to the bottom of the first classifying chamber 112A and the second classifying chamber 112B, respectively. The collection of the sand grains P from the first classifying chambers 112A and the second classifying chamber 112B is performed by suspending the supply of the raw water from the raw water carrier pipe 114 to the grit separation equipment 110, opening the sand discharge valve 129, and taking out the gravel and coarse sand grains in the first classifying chamber 112A together with flowing water through the sand discharge pipe 127, moreover, before or after the taking out, by opening the sand discharge valve 130, and taking out the fine sand grains in the second classifying chamber 112B together with flowing water through the sand discharge pipe 128.

The fine sand grains collected from the second classifying chamber 112B can be immediately used effectively for, for example, soil improvement of fields of rice and other crops. Moreover, the coarse sand grains, the gravel, etc. which are collected from the first classifying chamber 112A can be immediately used effectively for, for example, civil engineering and construction, a garden stone, etc..

Incidentally, although, in the grit separation tank 110 of this embodiment, the side wall of the spiral channel 119 having a spiral shape is configured by the upper extension walls 122a and 125a which are extended and formed at the upper parts of the side wall 122 of the first classifying chamber 112A and the side wall 125 of the second classifying chamber 112B, one or both of the first classifying chamber 112A and the second classifying chamber 112B can be tanks which separately have an angular tube shape or a cylindrical shape, and the spiral channel 119 can be configured by both side walls and a bottom plate separately formed.

According to the grit separation tank 110 shown in Figs. 6 - 9 as the first embodiment, the following effects (1) - (3) are achieved.
(1) The raw water slowed down in the slowdown channel 118 of the separation device 111 flows into the spiral channel 119 connected to this slowdown channel 118. Since this spiral channel 119 is spirally formed over the range between the upper part of the first classifying chamber 112A and the upper part of the second classifying chamber 112B, which are divided by the partition plate 132, and the slit 121 is furthermore provided along this spiral channel 119, the sand grains P in the raw water are separated due to the action of centrifugal force and the action of gravity by the inclined bottom plate 124 of the spiral channel 119, and are classified and accumulated in the first classifying chamber 112A and the second classifying chamber 112B, according to the magnitude of them. Accordingly, the sand grains P in each of the classifying chambers 112A and 112B can be immediately used effectively.

(2) Since the treated water by separating the sand grains P is discharged from the drain channel 117 which communicates with the discharge spout 120 formed at the end of the spiral channel 119, to the discharge pipe 116, the sand grains P (fine sand grains) dropping or having dropped in the second classifying chamber 112B and the flow of the treated water flowing in the drain channel 117 do not mix each other. Accordingly, the sand grains P (fine sand grains) cannot be involved in the flow of the treated water, and cannot mix with this treated water, and the clean treated water can be guided from the drain channel 117 to the drain pipe 116.

(3) Since the bottom plate 124 of the spiral channel 119 is provided inclining downward toward the slit 121 to the direction where centrifugal force acts on the flowing raw water, the sand grains P separated in the spiral channel 119 can be efficiently dropped in the slit 121.

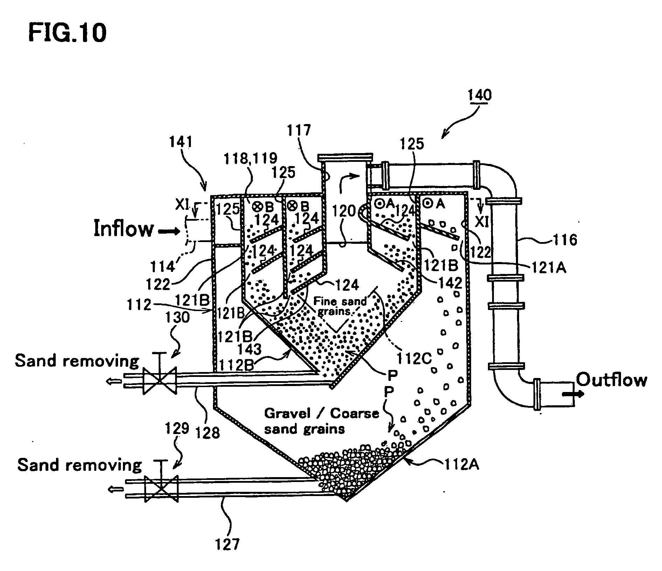

### [B] The second embodiment of the grit separation tank (Fig. 10, Fig. 11, Fig. 12)

Fig. 10 is a longitudinal sectional view of the grit separation tank 140 shown as the second embodiment. In this grit separation tank 140 of the second embodiment, the explanation of the same parts as the grit separation tank 110 of the first embodiment described above is omitted by giving the same symbols.

In this grit separation tank 140, the separation device 141 is configured to include the above described spiral channel 119 (hereinafter called the first spiral channel 119), and the second spiral channel 142 and the third spiral channel 143 which are plural (two channels in this embodiment), provided in the lower layer of the first spiral channel 119, and disposed to the area corresponding to the second classifying chamber 112B, respectively.

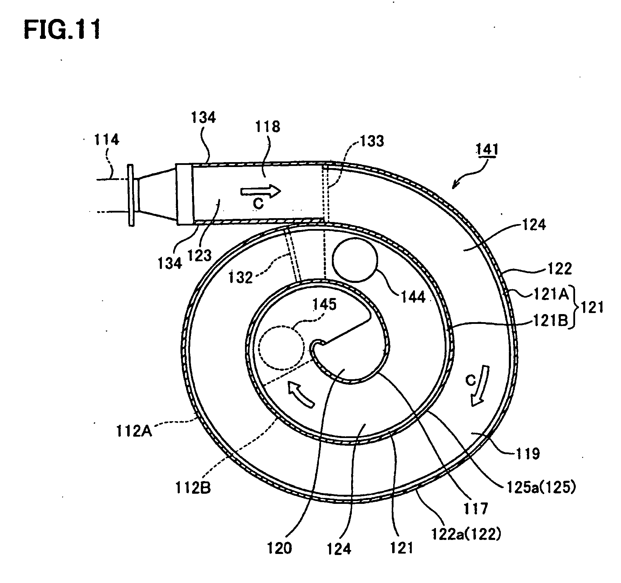

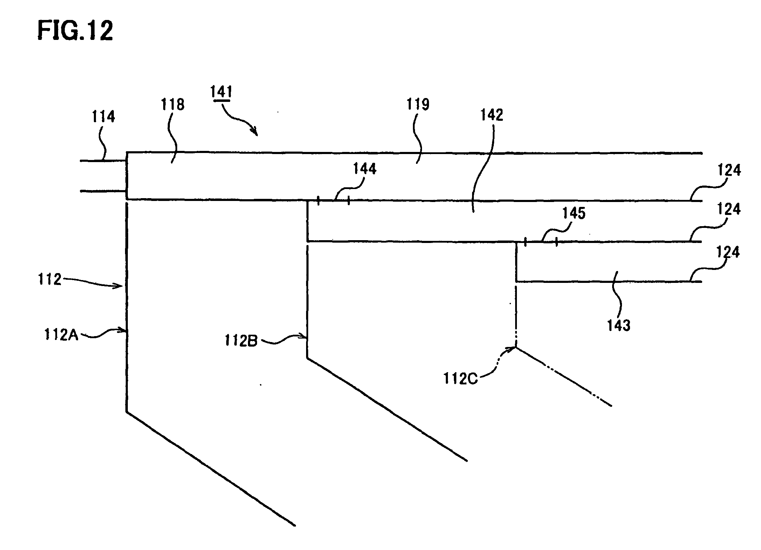

As developed and shown in Fig. 12, the second spiral channel 142 branches from the first spiral channel 119, and is provided under the first spiral channel 119. Moreover, the third spiral channel 143 branches from the second spiral channel 142, and is provided under the second spiral channel 142. Accordingly, the first spiral channel 119, the second spiral channel 142, and the third spiral channel 143 are formed as the hierarchical structure of plural layers (three layers). Then, each end of the above described spiral channels 119, 142, and 143 is oppositely lined up in a layered form in the discharge spout 120 at the end. The above described second spiral channel 142 and the third spiral channel 143, as well as the first spiral channel 119, also have inclined the bottom plate 124, and the slit 121B (see Fig. 11) is furthermore formed continuously between the point of the bottom plate 124 in the direction where centrifugal force acts, and the inner surface of the upper extension wall 125a of the side wall 125 of the second classifying chamber 112B.

The opening 144 is formed in the position where the second spiral channel 142 branches off in the bottom plate 124 of the first spiral channel 119, as shown in Figs. 11 and 12. The raw water which flows through the inside of the first spiral channel 119 is divided into the raw water which flows through the inside of the first spiral channel 119 directly in the downstream side of opening 144, and the raw water which flows down from the opening 144 toward the second spiral channel 142. Therefore, both of the raw water which flows from the opening 144 of the first spiral channel 119 toward the downstream side, and the raw water which flows in the second spiral channel 142 by way of the opening 144, are slowed down, and the deposit of the sand grains P (fine sand grains) in the raw water are accelerated.

Furthermore, the opening 145 is formed at the branch position where the second spiral channel 142 branches off in the bottom plate 124 of the third spiral channel 143 described above. The raw water which flows in the inside of the second spiral channel 142 is divided into the raw water which flows directly toward the downstream side of the second spiral channel 142, and the raw water which flows down to the opening 145, then toward the third spiral channel 143. Therefore, both of the raw water which flows in the downstream side than the opening 145 of the second spiral channel 142, and the raw water which flows in the inside of the third spiral channel 143 by way of the opening 145, are slowed down, and furthermore, the deposit of the sand grains P (fine sand grains) in the raw water are accelerated.

In addition, as shown in the chain double-dashed line of Figs. 10 and 12, the third classifying chamber 112C can be provided in the inside of the second classifying chamber 112B, according to the opening 145. The third classifying chamber 112C is provided under the area corresponding to the downstream side including the opening 145 in each of the first spiral channel 119, the second spiral channel 142, and the third spiral channel 143 lined up in the layered form. In this case, compared with the sand grains P (fine sand grains) accumulated in the second classifying chamber 112B, the sand grains P with finer grain size are accumulated in the third classifying chamber 112C.

In the third classifying chamber 112C, the fine sand grains of a desired grain size can be classified and accumulated by providing with other spiral channels in addition to the second spiral channel 142 and the third spiral channel 143 under the first spiral channel 119 to form multiple layers of three or more layers as a whole, and forming openings at arbitrary positions in each of the spiral channels.

Because of the above described structure, according to this grit separation tank 140 of the second embodiment, in addition to the effect (1) - (3) by the grit separation tank 110 of the first embodiment described above, the following effect (4) is achieved.
(4) The separation device 141 includes the first spiral channel 119, and the second spiral channel 142 and the third spiral channel 143 into which the first spiral channel 119 branches in the lower layer thereof, and the openings 144 and 145 are formed at each of branch positions. As a result of this, since the flow speed of the raw water is reduced by that the raw water flows in the inside of the plural spiral channels 119, 142, and 143 on the downstream side of the openings 144 and 145, the deposit of the sand grains P (fine sand grains) in the raw water are accelerated. Furthermore, when the third classifying chamber 112C is provided, compared with the sand grains P (fine sand grains) accumulated in the second classifying chamber 112B, the sand grains P with a smaller grain size can be accumulated.

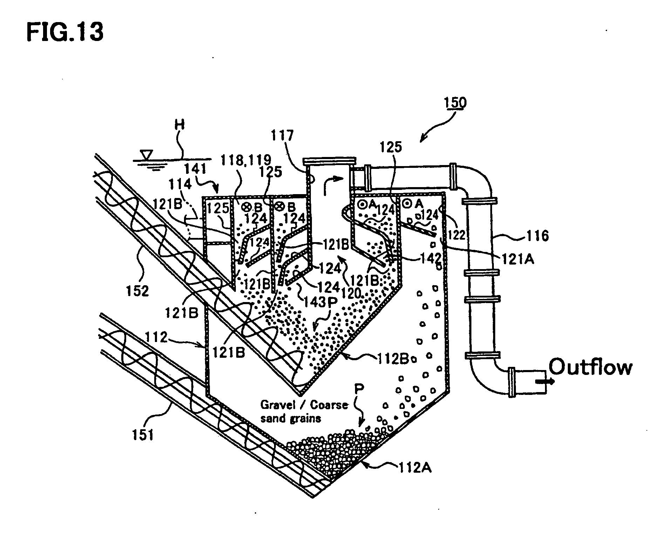

### [C] The third embodiment of the grit separation tank (Fig. 13)

Fig. 13 is a longitudinal sectional view of the grit separation tank 150 shown as the third embodiment. In this grit separation tank 150 of the third embodiment, the explanation of the same parts as the grit separation tanks 110 and 140 of the first embodiment and the second embodiment described above is omitted by giving the same symbols.

This grit separation tank 150 has other sand removing means in place of the sand discharge pipes 127 and 128 provided as the sand removing means in the first embodiment and the second embodiment. In Fig. 13, the first screw conveyor 151 and the second screw conveyor 152 as the sand removing means are provided at each bottom of the first classifying chamber 112A and the second classifying chamber 112B. When the sand grains P are collected from the first classifying chamber 112A and the second classifying chamber 112B, the supply of the raw water from the raw water carrier pipe 114 to the grit separation tank 150 is suspended, first, the first screw conveyor 151 is set in motion, the gravel and coarse sand grains in the first classifying chamber 112A are taken out, then, the fine sand grains accumulated in the second classifying chamber 112B is taken out and collected by the second screw conveyor 152. The ends of the first and second screw conveyor 151 and 152 are positioned above the water surface H.

In addition, the collection of the sand grains P from the first classifying chamber 112A and the second classifying chamber 112B can be performed during the supply of the raw water to the grit separation tank 150, and the collection of the sand grains P from the first classifying chamber 112A by the first screw conveyor 151 and the collection of the sand grains P from the second classifying chamber 112B by the second screw conveyor 152 can be performed simultaneously.

Moreover, in this embodiment, the point parts of the inclined bottom plates 124 of the first spiral channel 119 and the second spiral channel 142 in the direction where centrifugal force acts are bent downward, and are configured so that the sand grains P caught by the bottom plate 24 of each of the spiral channels 119 and 142 can be more steadily dropped into the second classifying chamber 112B.

Consequently, according to this the grit separation tank 150 of the third embodiment, in addition to the effects (1) - (4) by the grit separation tanks 110 and 140 of the first embodiment and the second embodiment described above, the following effects (5) and (6) are achieved.
(5) Since the first and second screw conveyor 151 and 152 for discharging accumulated the sand grains P are provided to the first classifying chamber 112A and the second classifying chamber 112B, respectively, the sand grains P accumulated in each of the classifying chambers 112A and 112B can be discharged simultaneously.

(6) Since the ends of the screw conveyors 151 and 152 are positioned above the water surface H, the sand grains P can be well dewatered at the ends of these screw conveyors 151 and 152.

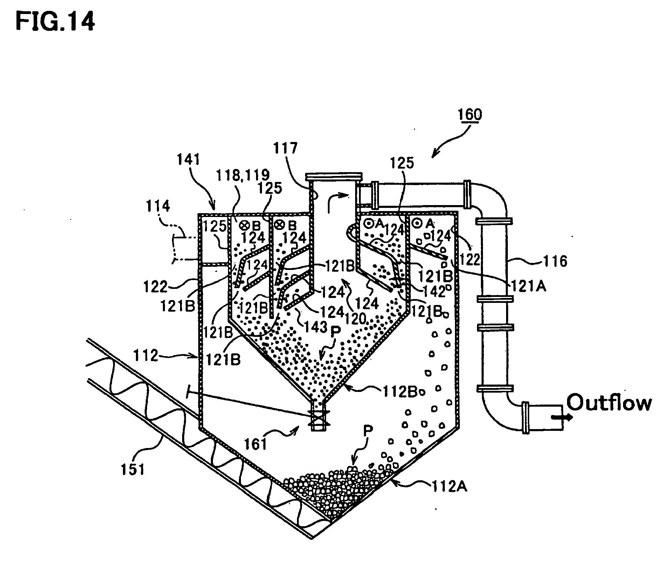

### [D] The fourth embodiment of the grit separation tank (Fig. 14)

Fig. 14 is a longitudinal sectional view of the grit separation tank 160 shown as the fourth embodiment. In this grit separation tank 160 of the fourth embodiment, the same parts as the above described grit separation tanks 110, 140, and 150 in the first embodiment, the second embodiment, and the third embodiment are illustrated in the same way, and the explanation thereof is omitted by giving the same symbols.

In this grit separation tank 160, the screw conveyor 151 as a sand removing means is provided in the bottom of the first classifying chamber 112A, and the sand discharge valve 161 as an opening and closing valve is provided in the bottom of the second classifying chamber 112B. The gravel and coarse sand grains in the first classifying chamber 112A are collected by setting the screw conveyor 151 in motion, and the fine sand grains in the second classifying chamber 112B are collected by the above described screw conveyor 151 in the same way, after the fine sand grains are dropped in the first classifying chamber 112A by opening the sand discharge valve 161.

When the sand grains P are collected from the first classifying chamber 112A and the second classifying chamber 112B, after the supply of the raw water from the raw water carrier pipe 114 to the grit separation tank 160 is suspended, and the raw water in the first classifying chamber 112A and the second classifying chamber 112B is discharged, screw conveyor 151 is first set in motion, and the sand grains P, such as the coarse sand grains and the gravel, in the first classifying chamber 112A are taken out and collected. Then, the sand discharge valve 161 is opened, the sand grains P such as the fine sand grains in the second classifying chamber 112B are dropped in the first classifying chamber 112A, the above described screw conveyor 151 is set in motion, and the sand grains P are collected.

Consequently, according to this grit separation tank 160 of the fourth embodiment, in addition to the effects (1) - (4) by the grit separation tanks 110 and 140 of the above described first embodiment and second embodiment, the following effect (7) is achieved.
(7) The screw conveyor 151 is provided in the first classifying chamber 112A, the sand discharge valve 161 is provided in the second classifying chamber 112B, and the sand grains P in the second classifying chamber 112B are discharged by the above described screw conveyor 151 by way of the first classifying chamber 112A by opening this sand discharge valve 161. Therefore, the number of screw conveyors as a sand removing means can be reduced, and the cost can be reduced.

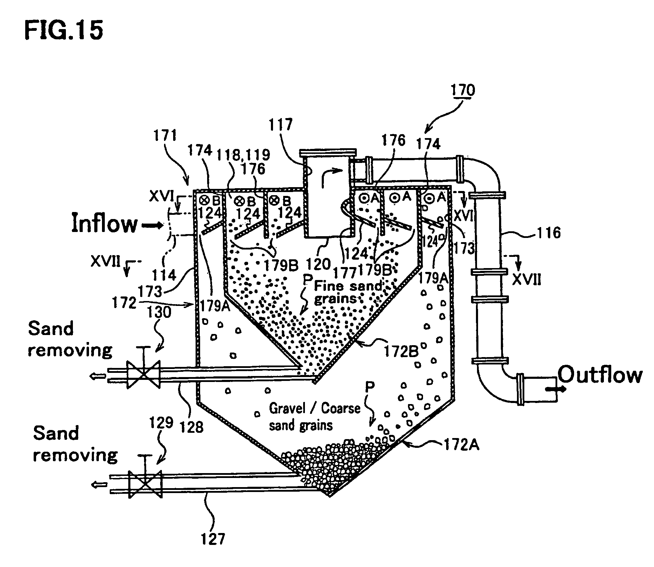

### [E] The fifth embodiment of the grit separation tank (Fig. 15, Fig. 16, Fig. 17)

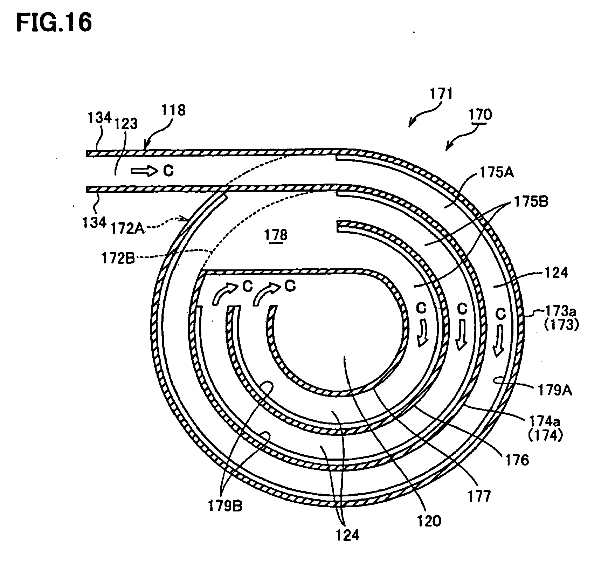

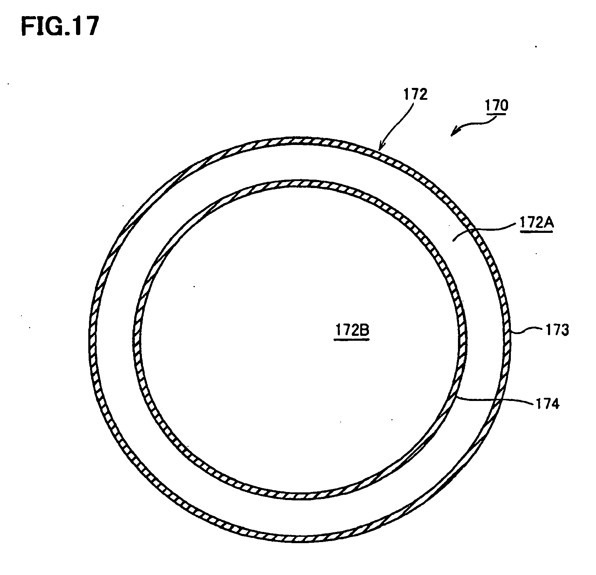

Fig. 15 is a longitudinal sectional view of the grit separation tank 170 shown as the fifth embodiment. Fig. 16 is a sectional view along the line XVI-XVI of Fig. 15, and Fig. 17 is a sectional view along the line XVII-XVII of Fig. 15. In this grit separation tank 170 of the fifth embodiment, the explanation of the same parts as the grit separation tanks 110 and 140 of the first embodiment and the second embodiment described above is omitted by giving the same symbols.

As shown in Figs. 15 and 17, this grit separation tank 170 is configured to include the first classifying chamber 172A as an outside classifying chamber of an outside tank, which is surrounded and configured by the side wall 173; the second classifying chamber 172B separately provided from the above described first classifying chamber 172A as an inside classifying chamber of an inside tank, which is surrounded and configured by the side wall 174 concentrically provided on the inside of the side wall 173; and the separation device 171 provided in the upper parts of both classifying chambers 172A and 172B. The first classifying chamber 172A and the second classifying chamber 172B form the accumulation device 172 which accumulates and deposits the sand grains P separated by the separation device 171.

As shown in Fig. 16, the separation device 171 includes the spiral channel 175A provided in the area corresponding to the first classifying chamber 172A, and formed between the inner surface of the upper extension wall 173a of the side wall 173 of this first classifying chamber 172A, and the outside surface of the upper extension wall 174a of the side wall 174 of the second classifying chamber 172B; and the spiral channel 175B approximately concentrically provided in the area corresponding to the second classifying chamber 172B, and, for example, divided in two directions. These spiral channel 175A and spiral channel 175B communicate through the communicating space 178 formed by cutting out a part of the side walls 174 (the upper extension wall 174a) and the partition 176 among the side wall 174 (the upper extension wall 174a) and the partitions 176 and 177 which form the spiral channel 175B. Accordingly, while the spiral channels 119, 142, and 143 in the first embodiment and the second embodiment described above are continuously formed spirally toward the central part, the spiral channels 175A and 175B of this embodiment are configured so that plural channels concentrically disposed are spirally formed toward inside.

The first slit 179A along the outside side wall (the side wall 173 (the upper extension wall 173a) of the first classifying chamber 172A) in the direction where centrifugal force acts is formed on the inclined bottom plate 124 of the spiral channel 175A, and the second slit 179B along the outside side wall (the side wall 174 (the upper extension wall 174a) of the second classifying chamber 172B and the partition 176) in the direction where centrifugal force acts is formed on the inclined bottom plate 124 of the spiral channel 175B.

Consequently, this grit separation tank 170 of the fifth embodiment produces the following effect (8), in addition to effects similar to the effects (1) - (3) achieved by the grit separation tank 110 of the first embodiment described above.
(8) Since the first classifying chamber 172A and the second classifying chamber 172B are concentrically formed, and furthermore, the spiral channel 175A and the spiral channel 175B of the separation device 171 are also formed concentrically, there is a necessity of placing the partition plate 132 between the first classifying chamber 112A and the second classifying chamber 112B like the first embodiment and the second embodiment. Because of this, the structure becomes simple, and the grit separation tank 170 can be more easily designed and manufactured.

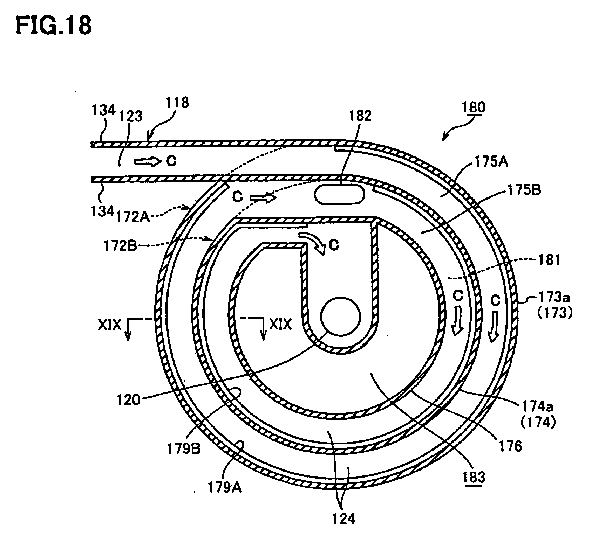

### [F] The sixth embodiment of the grit separation tank (Fig. 18, Fig. 19, Fig. 20)

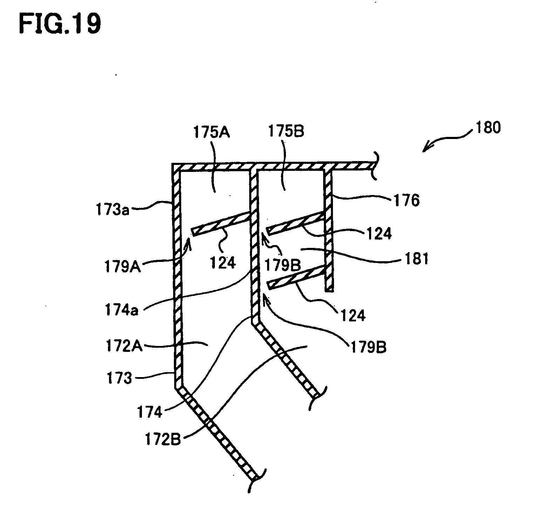

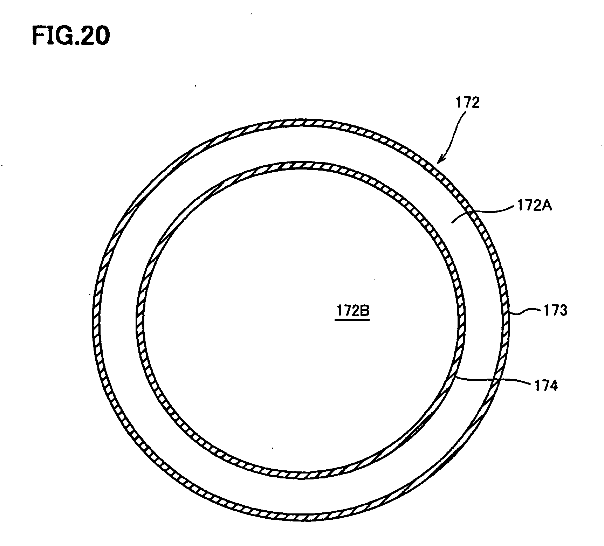

Fig. 18 is a longitudinal sectional view of the grit separation tank 180 shown as the sixth embodiment, corresponding to Fig. 16. Fig. 19 is a sectional view along the line XIX-XIX of Fig. 18, and Fig. 20 is a partially sectional view showing the first classifying chamber 172A and the second classifying chamber 172B of the separation device of Fig. 18. In this grit separation tank 180 of the sixth embodiment, the explanation of the same parts as the grit separation tank 170 of the fifth embodiment described above is omitted by giving the same symbols.

As shown in Figs. 18 or 20, in this grit separation tank 180, one layer or more layers of the second spiral channel 181 are formed under the spiral channel 175B in the area corresponding to the second classifying chamber 172B, and the opening 182 is formed on the bottom plate 124 of the spiral channel 175B in the branching point into the spiral channel 181 of a lower layer. Thereby, like the grit separation tank 140 of the second embodiment, since the raw water flows on the downstream side of the opening 182 in the spiral channel 175B into the discharge spout 120, and flows through the inside of the spiral channel 181 of a lower layer by way of the opening 182, the flow speed of the raw water is reduced, and the deposit of the sand grains in the raw water is accelerated. In addition, the symbol 183 in Fig. 18 shows the bottom face of the second classifying chamber 172B.

Consequently, according to this grit separation tank 180 of the sixth embodiment, in addition to the effects (1) - (4) by the grit separation tanks 110 and 140 of the first embodiment and the second embodiment described above, the effect similar to the effect (8) by the grit separation tank 170 of the fifth embodiment described above is achieved.

While each embodiment of the grit separation tanks is illustrated above, the raw water can be treated by adding a coagulant to the raw water, as described above. For example, the coagulant is added in the raw water guided from the raw water carrier pipe 114 to the inside of the grit separation tanks 110, 140, 150, 160, 170, and 180. By doing so, the deposit of the sand grains P in the raw water can be accelerated further. That is to say, since flocs whose nuclei are minute sand grains called micro sand included in the raw water can be formed by providing the coagulant in the upstream channel, the deposit of the sand grains P can be accelerated, and the sand grains P in this raw water can be better separated.

In addition, in the above, although it is explained that the grit separation tanks 110, 140, 150, 160, 170, and 180 shown in Figs. 6 to 20 are useful when being used as the grit separation tank 20 on the downstream side of the grit separation equipment shown in Fig. 1, naturally, these tanks can also be used as the grit separation tank 10 on the upstream side.

### Brief Description of Drawings

[Fig. 1] Fig. 1 (a) and (b) are a plan view and a side view of the grit separation equipment of the first embodiment of the present invention.
[Fig. 2] Fig. 2 (a) and (b) are a plan view and a sectional side view showing the outline structure of the grit separation tank on the upstream side of the same embodiment.
[Fig. 3] Fig. 3 is a schematic view showing the structure of channel from the grit separation tank on the upstream side to the grit separation tank on the downstream side of the same embodiment.
[Fig. 4] Fig. 4 (a) and (b) are a plan view and a side view of the grit separation equipment of the second embodiment of the present invention.
[Fig. 5] Fig. 5 (a) and (b) are a plan view and a sectional side view showing the outline structure of the grit separation tank on the upstream side of the same embodiment.
[Fig. 6] Fig. 6 is an appearance perspective view of the grit separation tank shown as the first embodiment useful as the grit separation tank on the downstream side described above.
[Fig. 7] Fig. 7 is a longitudinal sectional view of the grit separation tank of Fig. 6.
[Fig. 8] Fig. 8 is a sectional view along the line VIII-VIII of Fig. 7.
[Fig. 9] Fig. 9 is a sectional view along the line IX-IX of Fig. 7.
[Fig. 10] Fig. 10 is a longitudinal sectional view of the grit separation tank shown as the second embodiment.
[Fig. 11] Fig. 11 is a sectional view along the line XI-XI of Fig. 10.
[Fig. 12] Fig. 12 is a developed view showing the plural spiral channels and the like in Fig. 10.
[Fig. 13] Fig. 13 is a longitudinal sectional view of the grit separation tank shown as the third embodiment.
[Fig. 14] Fig. 14 is a longitudinal sectional view of the grit separation tank shown as the fourth embodiment.
[Fig. 15] Fig. 15 is a longitudinal sectional view of the grit separation tank shown as the fifth embodiment.
[Fig. 16] Fig. 16 is a sectional view along the line XVI-XVI of Fig. 15.
[Fig. 17] Fig. 17 is a sectional view along the line XVII-XVII of Fig. 15.
[Fig. 18] Fig. 18 is a sectional view corresponding to Fig. 16 of the grit separation tank shown as the sixth embodiment.
[Fig. 19] Fig. 19 is a sectional view along the line XIX-XIX of Fig. 18.
[Fig. 20] Fig. 20 is a horizontal sectional view showing the first classifying chamber and the second classifying chamber of the separation device of Fig. 18.

### Explanation of Reference

10, 10B Grit separation tank on the upstream side
11 Separation device
12 Accumulation device
13 Spiral channel
15, 15B Raw water inflow section
16, 16B Raw water supply pipe
17 Raw water outflow section
20, 20B Grit separation tank on the downstream side
21 Separation device
22 Accumulation device
23A Spiral channel
23B Spiral channel
25 Raw water inflow section
26, 26B Raw water outflow section
27, 27B Raw water discharge pipe
30 Connecting pipe
110 Grit separation tank
111 Separation device
112 Accumulation device
112A The first classifying chamber (outside classifying chamber)
112B The second classifying chamber (inside classifying chamber)
117 Drain channel
118 Slowdown channel
119 Spiral channel, The first spiral channel
120 Discharge spout (Raw water outflow section)
121, 121A, 121B Slit
123, 124 Bottom plate
140 Grit separation tank
141 Separation device
142 The second spiral channel
143 The third spiral channel
144,145 Opening
150 Grit separation tank
151, 152 Screw conveyor (Sand removing means)
160 Grit separation tank
161 Sand discharge valve (Opening and closing valve)
170 Grit separation tank
171 Separation device
172 Accumulation device
172A The first classifying chamber (Outside classifying chamber)
172B The second classifying chamber (Inside classifying chamber)
175A Spiral channel
175B Spiral channel
179A The first slit
179B The second slit
180 Grit separation tank
181 Spiral channel
182 Opening
H Water surface
P Sand grains

## Claims

1. Grit separation equipment, comprising:
two grit separation tanks (10, 20; 10B, 20B) disposed on an upstream side and on a downstream side respectively in a flow direction of raw water,
with each grit separation tank (10, 20; 10B, 20B; 110; 140; 150; 160; 170; 180) having, in an upper part thereof, a separation device (11, 21; 111; 141; 171) to separate sand grains from the raw water by action of centrifugal force and gravity, by flowing the raw water through a spiral channel (13; 23A, 23B; 119; 175A, 175B), and having, in a lower part thereof, an accumulation device (12, 22; 112; 172) to settle/deposit the sand grains separated by the separation device (11, 21; 111; 141; 171),
wherein the separation device (11) of the grit separation tank (10; 10B) on the upstream side is configured to separate coarse sand grains by flowing the raw water through the spiral channel (13) at high speed, and
the separation device (21) of the grit separation tank (20; 20B) on the downstream side is configured to separate fine sand grains by flowing the raw water through the spiral channel (23A, 23B) at lower speed than in the separation device (11) of the grit separation tank (10; 10B) on the upstream side, and
a raw water supply pipe (16; 16B) is connected to a raw water inflow section (15, 15B) of the grit separation tank (10; 10B) on the upstream side, and a raw water outflow (17) section of the grit separation tank (10; 10B) on the upstream side and a raw water inflow section of the grit separation tank (20; 20B) on the downstream side are connected to each other by a connecting pipe (30), and a raw water discharge pipe (27; 27B) is connected to a raw water outflow section (26; 26B) of the grit separation tank (20; 20B) on the downstream side,
wherein the accumulation device (12, 22; 112; 172) in at least either one of the grit separation tank (10; 10B) on the upstream side and the grit separation tank (20; 20B) on the downstream side has an outside classifying chamber (112A; 172A) and an inside classifying chamber (112B; 172B) provided to be isolated from the outside classifying chamber (112A; 172A) and the separation device (11, 21; 111; 141; 171) has the spiral channel (13; 23A, 23B; 119; 175A, 175B) formed so as to extend from an upper part of the outside classifying chamber (112A; 172A) to an upper part of the inside classifying chamber (112B; 172B), for passing the raw water therethrough, and has a slit (121, 121A, 121B; 179A, 179B) formed along the spiral channel (13; 23A, 23B) to allow the sand grains in the raw water to drop, which are then classified and separated into the outside classifying chamber (112A; 172A) and the inside classifying chamber (112B; 172B) according to a size of the sand grains, and the raw water outflow section (26; 26B) is formed on a terminal end of the spiral channel (13; 23A, 23B; 119; 175A, 175B).

2. The grit separation equipment according to claim 1, wherein a coagulant is added to the grit separation tank (20; 20B) on the downstream side.

3. The grit separation equipment according to claim 1 or 2, wherein the spiral channel (23A, 23B) is provided in the separation device (21) of the grit separation tank (20; 20B) on the downstream side, so as to reduce flow speed step by step, and the accumulation device (12, 22; 112; 172) has a plurality of classifying chambers (172A, 172B) so that the sand grains separated in each flow speed can be classified and accumulated.

4. The grit separation equipment according to any one of claims 1 to 3, wherein the raw water inflow section on the upstream side grit separation tank (10; 10B) is provided in a center of a spiral of the spiral channel (13).

5. The grit separation equipment according to claim 1, wherein the spiral channel of the separation device (11, 21) has a first spiral channel (119; 175A) formed so as to extend from an upper part of the outside classifying chamber (112A; 172A) to an upper part of the inside classifying chamber (112B; 172B), for passing the raw water therethrough, a second spiral channel (142; 175B) branched from the first spiral channel (119; 175A) and provided under the first spiral channel (119; 175A), for passing the raw water therethrough, an opening (144, 145; 182) formed at a position where the second spiral channel (142; 175B) is branched from the first spiral channel (119; 175A), and a slit (121, 121A, 121B; 179A, 179B) formed along each of the first spiral channel (119; 175A) and the second spiral channel (142; 175B) to allow the sand grains in the raw water to drop.

6. The grit separation equipment according to any of the preceding claims, wherein a bottom plate (123, 124) of the spiral channel (119; 175A) is downwardly inclined to the slit (121, 121 A, 121B; 179A, 179B), in a direction in which a centrifugal force acts on the raw water flowing through the spiral channel (119; 175A).

7. The grit separation equipment according to any of the preceding claims, wherein single or multiple classifying chambers are further provided inside of the inside classifying chamber (112B; 172B).

8. The grit separation equipment according to any of the preceding claims, wherein a sand removing means (151, 152) is provided on a bottom of the multiple classifying chambers.

9. The grit separation equipment according to any one of claims 1 to 8, wherein the spiral channel (13; 23A, 23B; 119; 175A, 175B) is formed spirally or concentrically.

## Patentansprüche

1. Kiestrenneinrichtung, die umfasst:
zwei Kiestrennbehälter (10, 20; 10B, 20B), die jeweils auf einer laufaufwärtigen Seite und auf einer laufabwärtigen Seite in einer Strömungsrichtung von Rohwasser angeordnet sind,
wobei jeder Kiestrennbehälter (10, 20; 10B, 20B; 110; 140; 150; 160; 170; 180) in seinem oberen Teil eine Trennvorrichtung (11, 21; 111; 141; 171) hat, um Sandkörner durch die Wirkung der Zentrifugalkraft und Schwerkraft von dem Rohwasser zu trennen, indem das Rohwasser durch einen Spiralkanal (13; 23A, 23B; 119; 175A, 175B) strömt, und in seinem unteren Teil eine Sammelvorrichtung (12, 22; 112; 172) hat, um die von der Trennvorrichtung (11, 21; 111; 141; 171) getrennten Sandkörner sich setzen zu lassen/abzulagern,
wobei die Trennvorrichtung (11) des Kiestrennbehälters (10; 10B) auf der laufaufwärtigen Seite aufgebaut ist, um grobe Sandkörner zu trennen, indem das Rohwasser mit hoher Geschwindigkeit durch den Spiralkanal strömt, und
wobei die Trennvorrichtung (21) des Kiestrennbehälters (20, 20B) auf der laufabwärtigen Seite aufgebaut ist, um feine Sandkörner zu trennen, indem das Rohrwasser mit einer niedrigeren Geschwindigkeit als in der Trennvorrichtung (11) des Kiestrennbehälters (10; 10B) auf der laufaufwärtigen Seite durch den Spiralkanal (23A, 23B) strömt, und
wobei eine Rohwasserversorgungsleitung (16; 16B) mit einem Rohwasserzulaufabschnitt (15, 15B) des Kiestrennbehälters (10; 10B) auf der laufaufwärtigen Seite verbunden ist und ein Rohwasserablaufabschnitt (17) des Kiestrennbehälters (10; 10B) auf der laufaufwärtigen Seite und ein Rohwasserzulaufabschnitt des Kiestrennbehälters (20; 20B) auf der laufabwärtigen Seite durch eine Verbindungsleitung (30) miteinander verbunden sind, und eine Rohwasserableitungsleitung (27; 27B) mit einem Rohwasserablaufabschnitt (26; 26B) des Kiestrennbehälters (20; 20B) auf der laufabwärtigen Seite verbunden ist,
wobei die Sammelvorrichtung (12, 22; 112; 172) in dem Kiestrennbehälter (10; 10B) auf der laufaufwärtigen Seite und/oder dem Kiestrennbehälter (20; 20B) auf der laufabwärtigen Seite eine äußere Klassifizierungs- bzw. Einteilungskammer (112A; 172A) und eine innere Einteilungskammer (112B; 172B), die von der äußeren Einteilungskammer (112A; 172A) getrennt bereitgestellt ist, hat, und die Trennvorrichtung (11, 21; 111; 141; 171) den Spiralkanal (13; 23A, 23B; 119; 175A, 175B) derart ausgebildet hat, dass er sich von einem oberen Teil der äußeren Einteilungskammer (112A; 172A) zu einem oberen Teil der inneren Einteilungskammer (112B; 172B) erstreckt, um das Rohwasser hindurch zu lassen, und einen entlang des Spiralkanals (13; 23A, 23B) ausgebildeten Schlitz (121, 121A, 121B; 179A, 179B) hat, um zuzulassen, dass die Sandkörner in dem Rohwasser, die dann eingeteilt und getrennt werden, entsprechend einer Größe der Sandkörner in die äußere Einteilungskammer (112A; 172A) und die innere Einteilungskammer (112B; 172B) fallen, und wobei der Rohwasserablaufabschnitt (26; 26B) auf einem Anschlussende des Spiralkanals (13; 23A, 23B; 119; 175A, 175B) ausgebildet ist.

2. Kiestrenneinrichtung nach Anspruch 1, wobei in dem Kiestrennbehälter (20; 20B) auf der laufabwärtigen Seite ein Fällmittel zugesetzt wird.

3. Kiestrenneinrichtung nach Anspruch 1 oder 2, wobei der Spiralkanal (23A, 23B) in der Trennvorrichtung (21) des Kiestrennbehälters (20; 20B) auf der laufabwärtigen Seite bereitgestellt ist, um die Strömungsgeschwindigkeit schrittweise zu verringern, und die Sammelvorrichtung (12, 22; 112; 172) eine Vielzahl von Einteilungskammern (172A, 172B) hat, so dass die bei jeder Strömungsgeschwindigkeit getrennten Sandkörner eingeteilt und gesammelt werden können.

4. Kiestrenneinrichtung nach einem der Ansprüche 1 bis 3, wobei der Rohwasserzulaufabschnitt des Kiestrennbehälters (10; 10B) auf der laufaufwärtigen Seite in einer Mitte einer Spirale des Spiralkanals (13) bereitgestellt ist.

5. Kiestrenneinrichtung nach Anspruch 1, wobei der Spiralkanal der Trennvorrichtung (11, 21) hat: einen ersten Spiralkanal (119; 175A), der derart ausgebildet ist, dass er sich von einem oberen Teil der äußeren Einteilungskammer (112A; 172A) zu einem oberen Teil der inneren Einteilungskammer (112B; 172B) erstreckt, um Rohwasser hindurch zu lassen, einen zweiten Spiralkanal (142; 175B), der von dem ersten Spiralkanal (119; 175A) verzweigt und unter dem ersten Spiralkanal (119; 175A) bereitgestellt ist, um das Rohwasser hindurch zu lassen, eine Öffnung (144, 145; 182), die an der Position ausgebildet ist, wo der zweite Spiralkanal (142; 175B) von dem ersten Spiralkanal (119; 175A) verzweigt, und einen Schlitz (121, 121A, 121B; 179A, 179B), der jeweils entlang des ersten Spiralkanals (119; 175A) und des zweiten Spiralkanals (142; 175B) ausgebildet ist, um zuzulassen, dass die Sandkörner in dem Rohwasser herunterfallen.

6. Kiestrenneinrichtung nach einem der vorhergehenden Ansprüche, wobei eine Bodenplatte (123, 124) des Spiralkanals (119; 175A) abwärts in eine Richtung zu dem Schlitz (121, 121A, 121B; 179A, 179B) geneigt ist, in der eine Zentrifugalkraft auf das durch den Spiralkanal (119; 175A) strömende Rohwasser wirkt.

7. Kiestrenneinrichtung nach einem der vorhergehenden Ansprüche, wobei die eine oder die mehreren Einteilungskammern ferner im Inneren der inneren Einteilungskammer (112B; 172B) bereitgestellt sind.

8. Kiestrenneinrichtung nach einem der vorhergehenden Ansprüche, wobei ein Sandentfernungsmittel (151, 152) auf einem Boden der mehreren Einteilungskammern bereitgestellt ist.

9. Kiestrenneinrichtung nach einem der Ansprüche 1 bis 8, wobei der Spiralkanal (13; 23A, 23B; 119; 175A, 175B) spiralförmig oder konzentrisch ausgebildet ist.

## Revendications

1. Equipement de séparation de sables, comprenant :
deux réservoirs de séparation de sables (10, 20 ; 10B, 20B) disposés sur un côté amont et sur un côté aval respectivement dans un sens d'écoulement d'eau brute,
avec chaque réservoir de séparation de sables (10, 20 ; 10B, 20B ; 110 ; 140 ; 150 ; 160 ; 170 ; 180) ayant dans une partie supérieure de celui-ci un dispositif de séparation (11, 21 ; 111 ; 141 ; 171) pour séparer des grains de sable de l'eau brute par action de la force centrifuge et de la gravité, en faisant s'écouler l'eau brute à travers un canal en spirale (13 ; 23A, 23B ; 119 ; 175A, 175B), et ayant dans une partie inférieure de celui-ci un dispositif d'accumulation (12, 22 ; 112 ; 172) pour déposer les grains de sable séparés par le dispositif de séparation (11, 21; 111; 141; 171),
dans lequel le dispositif de séparation (11) du réservoir de séparation de sables (10 ; 10B) sur le côté amont est configuré pour séparer des grains de sable grossiers en faisant s'écouler l'eau brute à travers le canal en spirale (13) à vitesse élevée, et
le dispositif de séparation (21) du réservoir de séparation de sables (20 ; 20B) sur le côté aval est configuré pour séparer des grains de sable fins en faisant s'écouler l'eau brute à travers le canal en spirale (23A, 23B) à une vitesse inférieure à celle dans le dispositif de séparation (11) du réservoir de séparation de sables (10 ; 10B) sur le côté amont, et
un tuyau d'alimentation en eau brute (16 ; 16B) est connecté à une section d'afflux d'eau brute (15, 15B) du réservoir de séparation de sables (10 ; 10B) sur le côté amont, et une section d'effluence d'eau brute (17) du réservoir de séparation de sables (10 ; 10B) sur le côté amont et une section d'afflux d'eau brute du réservoir de séparation de sables (20 ; 20B) sur le côté aval sont connectées l'une à l'autre par un tuyau de connexion (30), et un tuyau d'évacuation d'eau brute (27 ; 27B) est connecté à une section d'effluence d'eau brute (26 ; 26B) du réservoir de séparation de sables (20 ; 20B) sur le côté aval,
dans lequel le dispositif d'accumulation (12, 22 ; 112 ; 172) dans au moins l'un ou l'autre du réservoir de séparation de sables (10 ; 10B) sur le côté amont et du réservoir de séparation de sables (20 ; 20B) sur le côté aval possède une chambre de classification extérieure (112A; 172A) et une chambre de classification intérieure (112B ; 172B) prévue pour être isolée de la chambre de classification extérieure (112A ; 172A), et le dispositif de séparation (11, 21 ; 111 ; 141 ; 171) possède le canal en spirale (13 ; 23A, 23B ; 119 ; 175A, 175B) formé de manière à s'étendre d'une partie supérieure de la chambre de classification extérieure (112A ; 172A) à une partie supérieure de la chambre de classification intérieure (112B ; 172B) pour faire passer l'eau brute à travers lui, et possède une fente (121, 121A, 121B ; 179A, 179B) formée le long du canal en spirale (13 ; 23A, 23B) pour permettre aux grains de sable dans l'eau brute de tomber, lesquels sont ensuite classifiés et séparés dans la chambre de classification extérieure (112A ; 172A) et la chambre de classification intérieure (112B; 172B) en fonction d'une taille des grains de sable, et la section d'effluence d'eau brute (26 ; 26B) est formée sur une extrémité terminale du canal en spirale (13 ; 23A, 23B ; 119 ; 175A, 175B).

2. Equipement de séparation de sables selon la revendication 1, dans lequel un coagulant est ajouté au réservoir de séparation de sables (20 ; 20B) sur le côté aval.

3. Equipement de séparation de sables selon la revendication 1 ou 2, dans lequel le canal en spirale (23A, 23B) est prévu dans le dispositif de séparation (21) du réservoir de séparation de sables (20 ; 20B) sur le côté aval de manière à réduire la vitesse d'écoulement progressivement, et le dispositif d'accumulation (12, 22 ; 112 ; 172) possède une pluralité de chambres de classification (172A, 172B) de sorte que les grains de sable séparés dans chaque vitesse d'écoulement peuvent être classifiés et accumulés.

4. Equipement de séparation de sables selon l'une quelconque des revendications 1 à 3, dans lequel la section d'afflux d'eau brute sur le réservoir de séparation de sables côté amont (10 ; 10B) est prévue dans un centre d'une spirale du canal en spirale (13).

5. Equipement de séparation de sables selon la revendication 1, dans lequel le canal en spirale du dispositif de séparation (11, 21) possède un premier canal en spirale (119 ; 175A) formé de manière à s'étendre d'une partie supérieure de la chambre de classification extérieure (112A ; 172A) à une partie supérieure de la chambre de classification intérieure (112B ; 172B) pour faire passer l'eau brute à travers lui, un second canal en spirale (142 ; 175B) dérivé du premier canal en spirale (119 ; 175A) et prévu sous le premier canal en spirale (119 ; 175A) pour faire passer l'eau brute à travers lui, une ouverture (144, 145 ; 182) formée en une position où le second canal en spirale (142 ; 175B) est dérivé du premier canal en spirale (119 ; 175A) et une fente (121, 121A, 121B; 179A, 179B) formée le long de chacun du premier canal en spirale (119 ; 175A) et du second canal en spirale (142 ; 175B) pour permettre aux grains de sable dans l'eau brute de tomber.

6. Equipement de séparation de sables selon l'une quelconque des revendications précédentes, dans lequel une plaque inférieure (123, 124) du canal en spirale (119 ; 175A) est inclinée vers le bas vers la fente (121, 121A, 121B ; 179A, 179B) dans une direction dans laquelle une force centrifuge agit sur l'eau brute s'écoulant à travers le canal en spirale (119 ; 175A).

7. Equipement de séparation de sables selon l'une quelconque des revendications précédentes, dans lequel des chambres de classification uniques ou multiples sont en outre prévues à l'intérieur de la chambre de classification intérieure (112B ; 172B).

8. Equipement de séparation de sables selon l'une quelconque des revendications précédentes, dans lequel un moyen d'élimination de sable (151, 152) est prévu sur un fond des chambres de classification multiples.

9. Equipement de séparation de sables selon l'une quelconque des revendications 1 à 8, dans lequel le canal en spirale (13 ; 23A, 23B ; 119 ; 175A, 175B) est formé en spirale ou de manière concentrique.
